# EUROPEAN PATENT APPLICATION

(11) **EP 4 067 798 A1**
(43) Date of publication of application: **05.10.2022**
(21) Application number: 22164399.2
(22) Date of filing: 25.03.2022
(51) Int. Cl.: F27D 19/00, F27D 21/02, G01N 21/88, G01N 21/954, H04N 5/225

(54) **AN INSPECTION APPARATUS AND METHOD FOR USING AN INSPECTION APPARATUS**

(30) Priority: 31.03.2021 FI 20215381
(71) Applicant: Pyrovisio OY, 00520 Helsinki (FI)
(72) Inventor: JOKIVIRTA, Jouni, 00520 Helsinki (FI)
(74) Representative: Boco IP Oy Ab

(57) **Abstract**

According to an example aspect of the present invention, there is provided an inspection apparatus inspection apparatus 100. The insertion probe 104, together with an arm 122 form a tubular, preferably rigid structure. The invention is designed to be manually inserted to moderately hot cavities 306, for example, a boiler furnace in standstill, by using a handle arm 102, taking an insertion probe 104, inside a cavity 306 through an orifice 100. The inspection apparatus invention comprises the handle arm 102, the insertion probe 104, imaging sensor(s) 112, light source(s) 110, a turbine 200, and communications electronics 206, to wirelessly transmit video and/or still images 252 to an external electronic device 250 outside a cavity 306. Light source(s) can be turned on for better view of the objects under investigation. The inspection apparatus device 100, is protected against heat inside a cavity by utilizing gaseous medium 106, which is also used to power the on-board electronics of the insertion probe 104 and thus the use of batteries in hot or hazardous environments is avoided. Gaseous media flow adjustment configuration 124, can be realized in the handle arm of the inspection apparatus 100.

## Description

### FIELD OF THE DISCLOSURE

The disclosure relates to an essentially rigid inspection apparatus of moderately hot furnaces and other parts of heated systems, for example, during standstill, and particularly to an inspection apparatus designed for inspection of burners and other combustion system components and instruments.

### BACKGROUND OF THE DISCLOSURE

Boilers used in power generation are often equipped with burners and other components which are located on the walls, ceilings or floors of a furnace or flue gas system.

A typical power plant boiler houses numerous components which are placed on to a wall of a furnace, boiler pass or other parts of flue gas system. A burner is an example of a component which is facing the furnace through an orifice. Other similar components exist, for example combustion air delivery nozzles, urea or ammonia injection nozzles and refractory lining surrounding a burner. Dust cyclones, hot process tanks and sulphur oxide (SOx) compound scrubbers serve numerous examples of devices, which house a moderately hot cavity.

Above mentioned components and devices often require visual inspection from inside a cavity viewpoint. Using burners as a non-limiting example, flame baffle plate and surrounding refractory, for example, are subject to wear. Mechanical burner adjustments often require a view to the burner head, facing the furnace, since combustion air guiding blades are typically situated at the orifice to the furnace. Pilot burners are often designed in such way, that only a fraction of the combustion air required for stable flame flows through the pilot burner itself. For a pilot flame to reach stoichiometric combustion, some of the main combustion air must be used. This again means that a pilot burner must be inserted to a burner and combustion air fans must be running to adjust a stable pilot flame. For this adjustment, visual observation is highly beneficial. Furthermore, in many combustion plants, slagging and fouling is a matter of concern which requires regular assessment.

The disclosed inspection apparatus is applicable for visual inspection for any type of needs, including but limited to inspection, faults, wear, adjustments and planning.

Furnaces and other parts of flue gas systems are typically limited in their viewing options. Ports through furnace walls are few and often close to one meter long, and with less than 50 mm inner diameter. The field of view is therefore narrow when inspection is made with a human eye through a port. Furthermore, such viewing requires a light source, which is typically not present in process standstill.

An inspection with a viewpoint from inside the furnace is often favourable to conduct during a boiler standstill. However, the required plant downtime is also often desired to be kept at minimum and the inspection as efficient as possible. Devices and methods to inspect a burner from inside a furnace at current state-of-art involve a great deal of impracticality and improvisation. Typical industrial inspection cameras and action cameras are used for such inspections through furnace orifices. The state-of-the-art devices or methods are typically not specifically designed for general inspection of a moderately hot cavity. Therefore, such devices and methods are frequently impaired: Typical inspection cameras face difficulties with illumination requirements, picture focus depth and directing the camera backwards. Action cameras have similar problems and are bulky and lack industrial grade robustness. Devices with non-tube-like shapes are at risk of damaging when retracted. Often wireless properties are not sufficient enough for the signal to penetrate pressure vessels. Heat resistance is also a major issue in the above-mentioned state-of-the-art devices and methods, as a boiler is a significant source of latent heat long after combustion process is turned off. Often this residual heat is non-constant and therefore it is difficult to estimate its intensity beforehand. Any inspection device holding a battery in a hot or otherwise hostile environment is a source of concern, as batteries, when overheated, may leak, expand, flare, or even explode.

Boiler furnaces are limited in their viewing options through sight-glasses, sight tubes and/or ports, as described above. In this field, a port may also be referred to as a port hole. However, a state-of-the-art industrial burner typically comprises at least one of the following mounted on a port: pilot burner, optical flame sensor, fuel injection lance and a sight glass. All of which, when demounted, offer a direct pathway to area in front of a burner inside a furnace. Ports on a burner or on furnace walls are commonly one to three inches in inner diameter in nominal pipe size. Depth of such ports vary typically from approximately 300 to 1500 mm or sometimes up to 2000 mm. When above mentioned insertion ports are utilized, an elongated, essentially rigid inspection apparatus construction is required. In this context both a port and an orifice refer to a pathway between exterior and interior of a burner or boiler.

### BRIEF DESCRIPTION OF THE DISCLOSURE

An object of the present disclosure is to provide an inspection apparatus and a method of using the same so as to overcome the above problems.

The object of the disclosure is achieved by a portable inspection apparatus that can be used during a standstill or operation, if heat flux to the inspection apparatus can be kept low, to inspect industrial boiler burners and/or furnaces and other like components situated in moderately hot vessels and similar cavities, also in other industries, with imaging capacity to capture areas also in the approximate direction of the proximal end of the insertion probe. In other word, the inspection apparatus can "look behind".

Another object is to provide an inspection apparatus that can extend through a small port or orifice into a moderately hot cavity, and which wirelessly transmits images and video of components, structures and similar objects, as well materials and mediums, for example dust and fuels within the cavity under investigation.

Another object is to provide an inspection apparatus that can extend through a port or orifice into a moderately hot cavity, where a light source or light sources can be activated to get better images of the components, structures, and similar objects, as well materials and mediums, within the cavity under investigation.

Further object is to provide an inspection apparatus that has a component configuration, without using a battery or batteries as an energy source, for sufficient cooling to counteract heat from the moderately hot cavity of a combustion plant or other process in standstill or even during heat generating operation.

The invention may best be further described by reference to the detailed description in conjunction with the attached drawings in which at least one inspection camera, referred herein as an inspection apparatus 100, allows for relatively small ports 300 and/or orifices in burners 302, boilers, furnaces and/or other combustions and process systems to be utilized for inspecting objects inside such structure or cavity. Gaseous medium 106 is used to power and cool the electronic components on-board the insertion probe 104, thus no batteries are required for operation. The rigid and long nature of this inspection apparatus 100, additionally gives a level of penetration and broad field of view, including "backward facing" image and/or visual precision which is not possible with other camera systems. Using an array of light sources 110, such as at least one LED 110, and one imaging sensor 112, which are preferably attached to an insertion probe 104, which allows for easy viewing of the interior or the cavities 306, on an external electronic device 250, such as, for example, a computer, a tablet computer, a "smart phone", a receiver monitor display, to name a few. This type of system is ideal for general power plant and process industry professionals who want a simple way to see objects from the perspective of inside a moderately hot cavity 306, with minimal process down time, in order to make a proper assessment. According to come embodiments, the external electronic device can be fixed or removably attached at or near the proximal end of the handle arm 102. However, this is usually not an optimal position for the external electronic device because it increases risk of shocks which can easily harm the external electronic device.

The disclosure is based on the idea of providing an inspection apparatus that is cooled during operation using gaseous medium and flow of the gaseous medium is simultaneously used for generating electrical energy needed for operation of the active, electronic parts of an insertion probe of the inspection apparatus.

An advantage of the disclosure is that electronic parts of the insertion probe inspection apparatus do not require a battery or batteries to provide operating power. Thus, the allowed operation temperature range of the insertion probe can be optimized for moderately hot surroundings, which further reduces required down time for the system under investigation.

Wireless transmission eliminates the need for optical or electrically wired image data transmission through the handle arm of the apparatus. An on-board source of electricity in the insertion probe eliminates the requirement for electrical energy transmission through the handle arm. Therefore, the design for the handle arm is simplified and only transmission requirement for it is for gaseous medium.

According to a first aspect, an inspection apparatus I provided, comprising an insertion probe built into a hollow, rigid insertion tube extending axially at a distal end of a rigid handle arm. The insertion probe comprises at least one imaging sensor, at least one light source and at least one wireless communication means for communicating wirelessly with at least one external electronic device. Both the insertion probe and the handle arm have one or more pathways for gaseous medium flow. The insertion probe comprises energy conversion means, such as a turbine, to convert kinetic energy contained in said gaseous medium into electric energy.

According to a second aspect, the gaseous medium flow is configured, during operation of the inspection apparatus, to have a cooling effect on the components of the insertion probe.

According to a third aspect, the handle arm comprises or is connected to gas flow adjustment means for controlling cooling action achieved by a flow of the gaseous medium through said handle arm towards and through said insertion probe.

According to a fourth aspect, the at least one imaging sensor is selected from a group comprising a camera, a video camera, a still camera, an infrared camera, a thermal camera, and combination thereof.

According to a fifth aspect, the at least one light source comprises at least one light emitting diode (LED).

According to a sixth aspect, said insertion probe comprises at least one data port, and wherein said at least one data port is selected from a group comprising a video port, a digital port, a digital output port, a memory slot, a USB port, a Firewire port, a HDMI port, a digital output port, and combination thereof.

According to a seventh aspect, said insertion probe comprises at least one temperature sensor, and optionally at least one temperature-triggered switch.

According to an eighth aspect, said insertion probe comprises at least one directional or omnidirectional antenna for wirelessly transmitting still images and video to the at least one external electronic device.

According to a ninth aspect, said insertion probe comprises at least one mounting bar functioning also as a heat sink.

According to a tenth aspect, said at least one light source is protected from the ambient environment by a protective shielding made of transparent or translucent material and/or said at least one imaging sensor is protected from the ambient environment by a protective shielding made of transparent material.

According to an eleventh aspect, said transparent or translucent material is selected from a group comprising of glass, quartz, synthetic sapphire, polymeric material, composite material, and combinations thereof.

According to a twelfth aspect, material of the insertion tube forming a housing of the insertion probe is selected from a group consisting of metal, such as aluminium and stainless steel, plastic, a composite material, and combination thereof.

According to a thirteenth aspect, the hollow rigid insertion tube comprises a sloped section at the proximal side of the at least one imaging sensor. The sloped section is inclined inwards from the outer surface of the insertion tube for providing a wider angle of view for the imaging sensor towards the proximal end of the inspection apparatus and/or the hollow rigid insertion tube comprises a sloped section at the distal side of the at least one imaging sensor, wherein the sloped section is inclined inwards from the outer surface of the insertion tube for providing a wider angle of view for the imaging sensor towards the distal end of the inspection apparatus.

According to a first method aspect, a method of inspecting a cavity is provided, the method comprising the steps of opening a port or orifice leading to the cavity, adjusting flow of a gaseous medium through hollow rigid insertion tube, during operation, converting kinetic energy contained in said flow of gaseous medium into electric energy, inserting an insertion probe built into a hollow rigid insertion tube extending axially at a distal end of a hollow rigid handle arm of an inspection apparatus through said port or orifice into said cavity, activating at least one light source of the insertion probe and at least one imaging sensor of the insertion probe to conduct inspection within said cavity, conducting inspection by remotely viewing wirelessly transmitted still or video images of objects under investigation obtained by said at least one imaging sensor and transmitted by a wireless communication means of said insertion probe, removing said insertion probe from the cavity upon completion of said internal cavity, and closing said port or orifice leading to the cavity.

According to a second method aspect, the method comprises cooling components of the insertion probe during operation of the inspection apparatus by the flow of the gaseous medium.

### BRIEF DESCRIPTION OF THE DRAWINGS

In the following the disclosure will be described in greater detail by means of preferred embodiments with reference to the accompanying drawings, in which
Figure 1 illustrates a side perspective view of use of an inspection apparatus for inspecting a cavity.
Figure 2 illustrates a side cut-away view of the handle arm and regulating configuration for gaseous medium.
Figure 3 illustrates an upper view of the insertion probe. For illustration purposes the insertion probe is presented in three parts, connected as per signs a to a and b to b.
Figure 4 illustrates a side cut-away view of the insertion probe. For illustration purposes the insertion probe is presented in three parts, connected as per signs a to a and b to b.
Figure 5 illustrates a side view of the insertion probe with multiple imaging sensors and light sources. For illustration purposes the insertion probe is presented in three parts, connected as per signs a to a and b to b.

### DETAILED DESCRIPTION OF THE DISCLOSURE

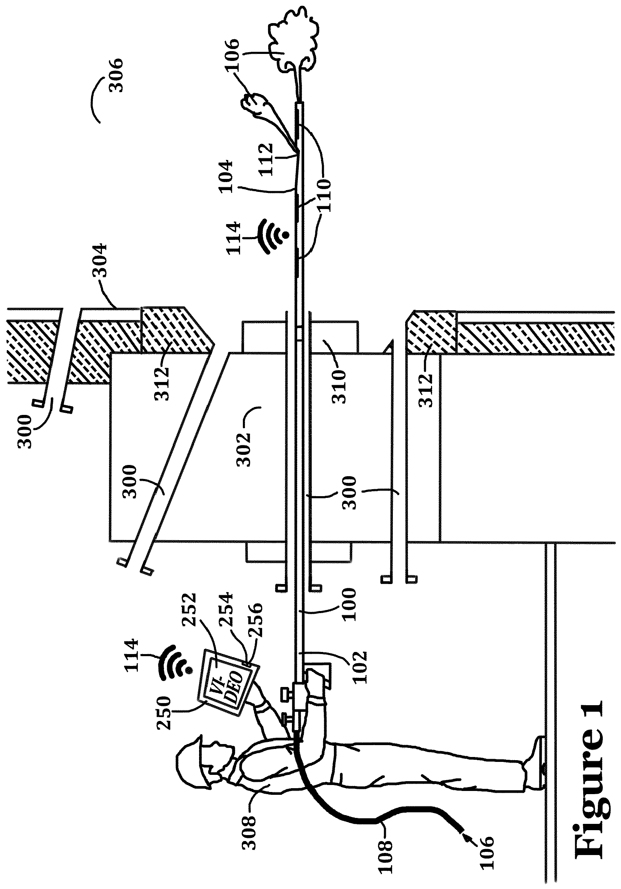

The inventive inspection apparatus and a method of using same will now be discussed with reference to figures 1 through 5. These drawings are for illustration purposes only and not drawn to scale.

The inspection apparatus can be used to inspect structures that are difficult to access, especially, if it is desired to inspect dark cavities and/or vessels with latent heat transfer. Ports and/or orifices can be defined in the walls, ceilings and/or floors of the structure to allow for the passage of a tip of the inspection apparatus. The inspection apparatus can be extended through these ports and/or orifices and used to wirelessly transfer images of the components under investigation to a monitor on an external electronic device. After the investigation has been completed the inspection apparatus is removed, the ports or orifices are closed or plugged.

Problems in known prior art are solved by an inspection apparatus, which is portable, temporarily inserted, optionally remotely controlled, essentially rigid, tubular and does not pose a risk which is present in devices with on-board batteries. The inspection apparatus device is designed for general viewing of cavities. Field of view of imaging sensor(s) of the inspection apparatus can be, for example, directed at the general direction of proximal end of the insertion probe. Thus, capturing images from objects from which the apparatus is inserted through. This inspection apparatus is capable of illuminating the objects, structures and surfaces under inspection and is built with cooling capacity, with, for example, compressed air as cooling medium. The device is therefore designed for industrial use.

Burners in power plants are typically equipped with ports which offer a direct line of sight to the space in front a burner - the area which houses a flame during combustion operation. Such ports may also be in the proximity of a burner and are typically in inner diameter from approximately 35 mm to 100 mm. However, there may be smaller and larger ports and orifices in various shapes. In a state-of-the-art industrial burner at least one of the following is connected to the above-described ports: pilot burner, flame scanner, fuel lance and sight glass. If no vacant ports are available, by temporarily removing one above-mentioned component, a line of sight to the furnace can be made available for inspection apparatus probe insertion.

The inspection apparatus is designed to be inserted through burner ports and/or their surrounding ports, as well as other ports along a combustion or flue gas system, during a process standstill. The inventive apparatus is operated with gaseous media, in one exemplary embodiment, compressed air, serving two purposes: powering and cooling the electric components on-board the insertion probe. Inspection of burners in all positional orientations and other combustion system components as well as components in process industry may also be conducted with the inspection apparatus. For example, furnace walls, SNCR injectors, ducts, cyclones and tanks, as well as scrubber vessels structures and scrubber spray patterns may be inspected with the inventive device. Gas cooling capacity enables inspections during a quick standstill, therefore reducing combustion plant or process down time and improving plant availability. The inventive inspection apparatus can also be operated in room temperature environments, of course. However, with no on-board batteries the inventive inspection apparatus can be operated at the upper temperature limits of its electrical components without fear of battery related damage. Heat flux to the insertion probe depends on various parameters, for example, cooling gas temperature, probe size and level of radiation and convection exposure through penetration depth. In general, the insertion parts of the inspection apparatus are designed to withstand ambient temperatures of at least 100 to 200 degrees Celsius with help of the cooling gas. However, the temperature resistance of the insertion parts of the inspection apparatus can be more with device configurations specifically designed for higher temperatures. "Moderately hot" in this context refers to temperatures inside a cavity or area of a cavity where an inspection apparatus probe with on-board electronics can be operated by cooling with gaseous medium alone, for example compressed air, without utilizing cooling liquid, such as water. Upper temperature limit of environment for such applications is typically between 75 and 300 degrees Celsius, more commonly between 100 and 200 degrees Celsius.

The figure 1 illustrates a side perspective view of an inspection apparatus 100 according to one embodiment of this invention. The inspection apparatus 100 comprises of a handle arm 102 and insertion probe 104, which are dimensioned to fit through typical ports 300 of combustion systems. The main flame of an industrial size burner, heating the cavity 306, is not firing during inspection. Gaseous media 106, for example, compressed air, can be connected to the handle arm 102 via flexible hose 108. Insertion probe 104 enters to a generally dark and potentially moderately hot cavity 306 where latent heat from combustion process may reside. Gaseous media 106 is used to provide both energy and cooling for electronics of the insertion probe 104, from which the gaseous medium 106 exits. On or more light sources 110 on the insertion probe effectively illuminate surfaces to approximately in 5 meters distance, or more, with approximately 180 degrees illuminating angle. An imaging sensor 112 may be "fisheye" type with broad viewing angle with 180-degrees field of view, or, for example, more limited 90 degrees field of view or even more limited field of view, such as 60 or 40 degrees, which can be physically or electronically directed. Any field of view equal or less than 90 can be considered limited. Physical directing of the field of view may be implemented for example using an adjustment means, such as a screw and/or a lever. A small, remotely controllable electrical motor may provide capability to direct the field of view remotely. The inspection apparatus 100, is designed for general viewing. Thus, the imaging sensor 112, is preferably also capable of looking in the general direction from which the insertion probe 104 is inserted from - thus, "looking behind" or "looking backwards". In the figure 1 the exemplary areas under inspection include combustion air guide blades 310, surrounding refractory 312 and heat exchange surfaces 304. An imaging sensor 112 may also be used to inspect objects that situate in other directions. The inspection apparatus 100, may be rotated 360-degrees around its longitudinal axis and moved otherwise by the operator 308, by using the handle arm 102. Thus, allowing a better viewing of the structures and surfaces under inspection. According to some embodiments, the viewing angle of the imaging sensor 112 is adjustable with respect to the longitudinal axis of the insertion probe. Adjustment of the viewing angle in traversal direction is easily achievable by rotating the inspection device about its longitudinal axis.

The figure 1 further illustrates, according to one embodiment, wireless transmission 114, which during operation transfers video, still images, and/or other device data 252 between the insertion probe 104, and an external electronic device 250, such as, for example, a computer, a smartphone, a tablet computer, to name a few. This transmission 114, of images, video and/or other device data 252 onto an external electronic device 250, may be done in a number of manners, such as, for example, streaming a video 114, in a "network" fashion via Wi-Fi, or it may be done in an ad-hoc fashion where the connection is directly between insertion probe 104 and an external electronic device 250. For some applications, the transmission 114 may be recorded onto an external memory device 254, such as a memory card inserted in a memory card slot 256. No electrical or image transmission is performed through wired connections in the handle arm 102, and only gaseous media is supplied through it. This simple construction allows the length of the handle arm 102 be as long as the operator 308 can practically carry and operate the device, for example up to 7 meters. Therefore, general inspection of furnaces 306, and other similar spaces is made possible, within the range of cooling and illumination capacity.

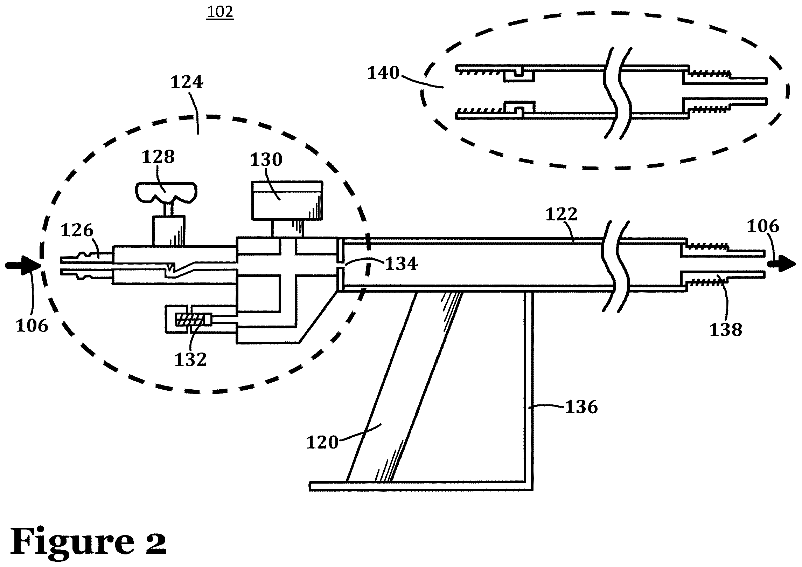

The figure 2 illustrates a side cut-away view of the handle arm 102, according to one embodiment of the invention, comprising a handle 120, an arm 122 and a gaseous medium flow adjustment configuration 124. The gaseous medium flow adjustment configuration 124, comprises a gaseous medium connector 126, a valve 128, pressure gauge 130, pressure relief valve 132 and a throttle 134. Such configuration enables the usage of different supply gas pressures, which varies from plant to plant. For example, a compressed air network provides typically compressed air with pressure between 3 and 9 bars(g). A gaseous medium supply (not shown) is connected to the gaseous medium connector 126. The operator opens the valve 128, which may be any type of valve or pressure regulator suitable for flow adjustments. Thereafter the gaseous medium 106, is throttled by a fixed size throttle 134, allowing limited gas flow to the arm 122 and subsequently into insertion probe 104. As the throttle 134 has a fixed size and the subsequent system is in practical terms open ended, the pressure indicated by the pressure gauge 130 can be roughly calculated in gas flow. The operator thus adjusts a suitable gaseous medium flow by adjusting the pressure. Pressure relief valve 132 reduces excess pressures and flows from entering the arm 122 and into the insertion probe 104. Gaseous medium configuration 124, can be arranged in numerous other ways, by, for example, using a gas pressure regulator, and, for some applications, the inspection apparatus 100 can be designed with external flow control of gaseous medium 106. The figure 2 furthermore illustrates a handle 120 extending from the arm 122 for the operator to operate the inspection apparatus 100 for inserting it into the cavity and rotating. A handle guard 136 may be provided to protect the operator from injuries, especially when inspection apparatus 100 is used in vertical orientation. The handle 120 may also have another shape, for example, the handle 120 may imitate a fishing rod handle, integrated to the arm 122.

The figure 2 further illustrates, according to one embodiment of the invention, an arm 122, which can be securely mated with the insertion probe 104 either directly, or by using one or multiple extension arms 140. Length of the inspection apparatus from the handle 120 to an imaging sensor 112 may preferably be between 0.7 and 7 meters, and its length can preferably be adjusted with extension arms 104. A telescopic pole type arm, for example, may also be utilized to realize functions of the arm 122 and extension handle arm(s) 140. At the distal end of the arm 122 is a connector 138 for securely mating the arm 122 to an extension arm 140 or to the insertion probe 104, while simultaneously allowing the passage of gaseous medium 106. The mating between the arm 122, optional extension arm(s) 140 and the insertion probe 104 is axial, rigid and secure. The arm 122, the extension arm 140, and the insertion probe 104 are all provided with a channel for enabling passage of gaseous medium 106 through the structure. For example, the arm 122, the extension arm 140, and the insertion probe may have a form of a hollow tube or they may comprise a duct or channel extending in longitudinal direction of the respective part. According to an alternative embodiment, the insertion probe 104 is integrated to the distal end of the arm 140. The inspection apparatus is preferably essentially rigid. According to a preferred embodiment, the insertion tube, the arm and the extension arm are all rigid structures. According to some embodiments, the insertion probe, the arm and/or an extension arm comprises or is attached to a bendable portion, such as a joint. The bendable portion should be at least temporarily lockable into any wanted position thus causing the apparatus to be essentially rigid during inspection operation so that the bendable portion does not accidentally or unwantedly bend during inspection operation.

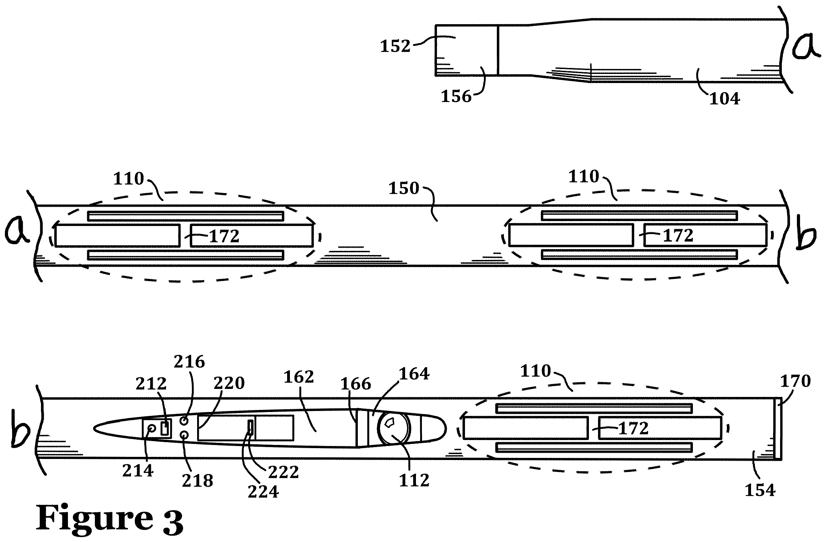

The figure 3 illustrates an up-side perspective view of the insertion probe 104. In one embodiment, the insertion probe 140 comprises a connector 156 at the proximal end 152 of the insertion probe 104, at least one light source 110, an optional protective grill 172, and imaging sensor 112. The protective grill 172 may be formed for example by a portion of the hollow tube forming majority of the outer surface of the insertion probe 104. Instead of or in addition to the protective grill 172, a transparent medium may be used to protect operative components of the insertion probe 104. Operating buttons and indicative signal providing means, for example indication lights, may be placed on an inclined portion of the outer surface of the insertion probe 104, referred to as a sloped section 162, which is on the proximal side of an imaging sensor 112. One purpose of the sloped section 162, is to offer a free line of sight for the imaging sensor 112. When the slope on the proximal side of the imaging sensor is inclined inwards from the outer surface of the insertion probe so that it enables a wider line of sight for the imaging sensor 112, and in particular a better line of sight approximately towards the proximal end of the inspection apparatus 100.

According to some embodiments the insertion probe is provided with remote control. Once the insertion probe 104 is inserted to a cavity 306, the operator 308, can only remotely operate and adjust settings of the insertion probe 104. Therefore, the inspection apparatus 100 is controlled from outside of the cavity 306, by using an external electronic device 250, and the insertion probe 104 comprises parts needed to enable remote control, such as an on-off button 212, a reset button 214, a power indication light 216, a wireless signal indication light 218, a data port 220, a memory slot 222, a memory card 224, a wireless control switch (not shown), and/or a camera control switch (not shown). The wireless control switch is preferably useable at least for selecting a frequency channel used by wireless communication. The camera control switch provides means for controlling setup of the imaging sensor 112. The on-off button operates a switch, that enables switching the insertion probe 104 on and off. In some embodiments, any of these parts may be hidden under a protective flap.

According to some embodiments, the insertion probe 104 may also be operative without some or even any such operation buttons. For example, the insertion probe 104 does not need an on-off switch, when it is configured to activate upon receiving electrical power from the device's on-board electricity providing means, such as a turbine that generates energy as will be discussed later. Even such automatically activating insertion probe 104 may comprise some parts for enabling remote control, such as a wireless control switch, a camera control switch and like.

The insertion probe 104 is built to a hollow, preferably rigid insertion tube 150. Alternatively, or in addition, a slope may be defined at distal side of the at least one imaging sensor, so that the slope inclines inwards from the outer surface of the insertion tube. The slope on the distal side of the imaging sensor provides a wider angle of view for the imaging sensor towards the distal end of the inspection apparatus. According to an alternative embodiment, the insertion probe 104 is integrated to the distal end of the arm 140 so that no connector 156 is needed in the insertion probe nor in the arm.

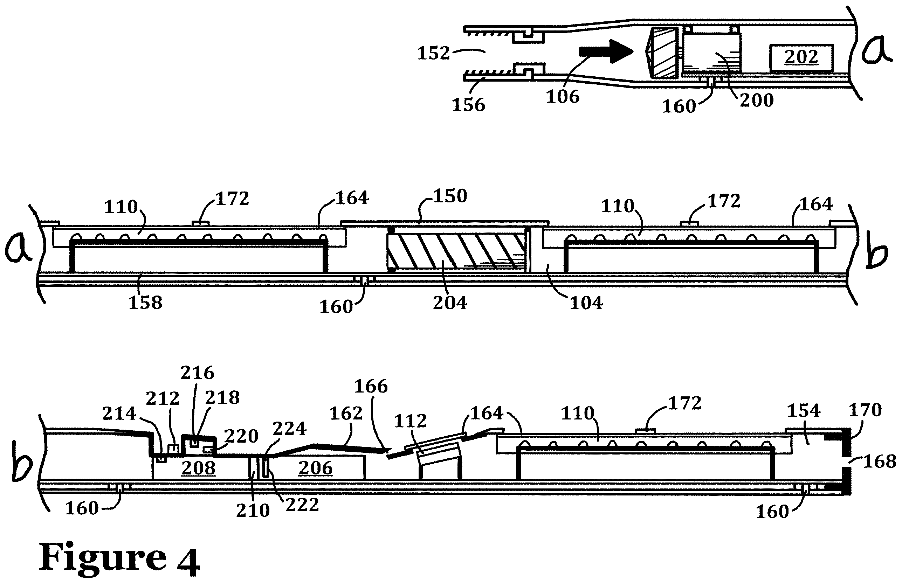

The figure 4 illustrates a side cut-away view of the insertion probe 104. In one embodiment, there is a connector 156 at the proximal end of the insertion probe 152. Purpose of the connector 156 is to securely mate the hollow insertion tube 150 axially with the connector 138 at the distal end of the arm 122 or an extension arm 140. Other examples of securely mating parts include welding or using the same tube for the arm 122 and the hollow insertion tube 150. Main electrical components may be fitted onto a mounting bar 158, which is during assembly slid into the hollow insertion tube 150. The bar 158 may be trapezoidal in profile or, for example, arched. The mounting bar 158 is fixed into position by screws 160, which, when tightened, raises the bar 158 and its components against the opposite side of hollow insertion tube 150 and thus, locking components securely into a wanted position. The contact area available for conductive heat transfer is also minimized because the screws 160 and gas sealing areas around the openings are the only contacts areas between the hollow insertion tube 150 and its internal components. Therefore, heat conduction from the hollow insertion tube 150 to internal components is minimized. Internal components of insertion probe 104 may be locked into position by other means, for example, by directly mounting the components into the hollow insertion tube 150. The hollow insertion tube 150 can be fashioned from a number of materials, including, for example, metals, aluminium, plastics, stainless steel, composite materials, to name a few. A tube with a circular profile is favourable because ports and orifices on combustion and process systems also often circular, thus maximizing usable cross-section area of a typical port. However, other profiles may also be used. One important distinction is that the outer diameter of the cross-section of the hollow insertion tube 114 is favourably ranging from approximately 27 to 42 mm. The diameter may be smaller, however then requiring non-standard materials and components. The diameter may also be larger, which then again reduces the number of applicable ports and orifices. Axial, longitudinal length of an insertion probe 104 is approximately one meter, although number and size of light sources 110, can greatly affect the length of an insertion probe 104. An end cap 170 is placed at the distal end 154 of the hollow insertion tube 150. Gaseous medium 106 escapes through one or more openings 166 and 168 on the insertion probe 104. Opening(s) in the insertion probe may be directed at the imaging sensor 112 or at a protective shielding 164 made of transparent material, protecting the imaging sensor 112, thus flushing the surfaces and improving visibility. Gaseous medium discharge may be realized in numerous other manners, although it is favourable to discharge the gaseous medium 106, through the distal end of insertion probe 154, thus reducing the risk of lifting dust from surfaces under inspection.

The figure 4 further illustrates one embodiment comprising a turbine 200, a regulating unit for electricity 202, light sources 110, an antenna 204, a wireless transmission unit 206, an electrical main unit 208, temperature sensor 210 and imaging sensor 112. The electrical main unit 208 comprises electronic components such as at least one processor and at least one memory. The turbine 200, also referred to as a wind energy converter, is a kind of miniature wind turbine that comprises a blade arrangement or equivalent that moves due to flow of the gaseous medium 106 passing through it and a generator for converting kinetic energy of the gaseous medium 106 into electrical energy, and functions as an on-board source of electricity for the insertion probe 104. Parameters of electricity created by the turbine 200 are regulated in the regulating unit for electricity 202. By using the turbine 200, the use of batteries is eliminated. In hot and hostile environments, the use of batteries poses a risk of damage to the batteries, which could lead to battery leakage, expansion, flaring or even explosion. Light sources 110 may be situated along the proximal, distal or both directions of an imaging sensor 112. One or more protective grills 172 may mechanically protect the light sources. However, for favourable illumination of structures and surfaces inside a dark cavity 306 under inspection, one or more light sources 110 situate on both proximal and distal sides of an imaging sensor 112. In most applications a one-sided illumination is sufficient. A light source 110 comprises, for example, multiple LEDs or LED filaments, which are preferably housed under a transparent or translucent media 164 - forming in effect a larger and single source of light, thus capable of approximately 180-degrees of illumination. Advantage provided by long light sources 110 is that their intrinsic heat production is distributed to relatively large area. Further advantage is that long light sources 110 illuminate objects in a dark cavity 306 generally well. Lighting is preferably designed to correspond the imaging device's viewing capacity. For example, 180-degree illumination is suitable for 180-degree viewing. The imaging sensor 112 has favourably the capacity to see at least in part to the general direction of the proximal end of insertion probe 152. Imaging sensor(s) in totality can view in a broad field of view. A wide total field of view can be achieved with physical or electronical adjustments of the direction of view. A robust LED light source may also be used without any specific protective media.

In the figure 4, in one embodiment of the invention, a wireless transmission unit 206 is coupled with an antenna 204, which may be a directional antenna. In one embodiment of the invention, a directional double helical antenna 204 is utilized. However, other types of antennas are also applicable. The operator 308 of the inspection apparatus 100 is presumed to be near the handle 120 near or at the proximal end of the device, and significant signal obstructing structures, such as a burner 302, furnace wall 304, refractory 312, and/or other vessel structures are presumed to situate between the operator 308 and antenna 204. Therefore, a directional antenna is advantageous to improve the wireless connection provided between the insertion probe 104 and the external electronic device 250.

As shown in the figure 4, in one embodiment of the invention, the electrical main unit 208 comprises a wireless transmission unit 206, a temperature sensor 210, an on-off button 212, a reset button 214, a power on indication light 216, a wireless signal indication light 218, memory slot 222, a memory card 224, and a data port 220, which may be, for example, a USB type port. For enabling the imaging sensor 112 to have a view towards proximal end direction of the insertion probe, a sloped section 162 is designed onto the profile of a hollow insertion tube 150. A user interface with user interface elements such as indicator lights and operation buttons, may be provided in the insertion probe 104, and it is preferably situated on the sloped section 162 and electrical main unit 208 is at least partially situated under the slope. Another mirror imaged sloped section 162 can be realized on the distal side of the imaging sensor 112. The temperature sensor 210 may be utilized for detecting temperature at the insertion probe and an alert may be provided if the temperature exceeds a predefined threshold value. An alert thus indirectly indicates that cooling action of the gaseous medium flow is perhaps not sufficient for maintaining the inspection probe 104 in its allowed operation temperature range. Furthermore, one or more temperature-triggered switches may be provided for switching off at least some electrically operated parts, when measured temperature inside the probe indicates that there is a risk of overheating.

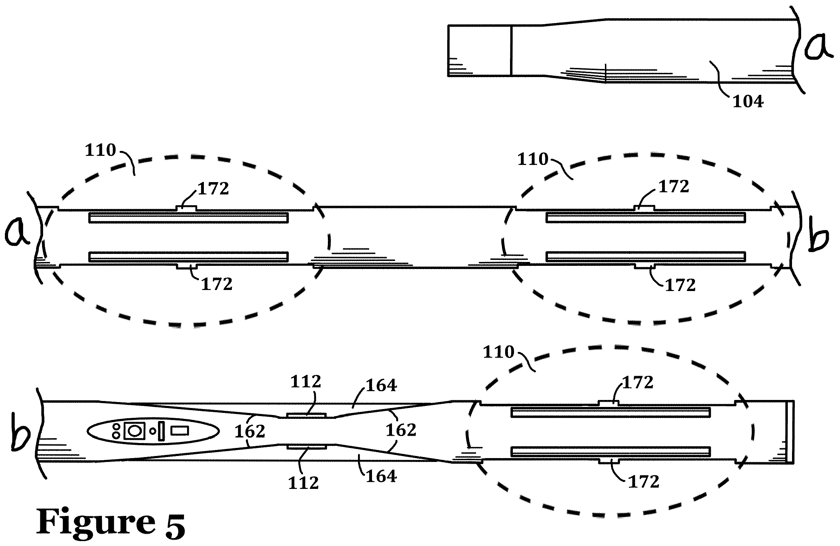

The figure 5 illustrates an alternative embodiment of the invention, in which two or more imaging sensors 112 and light sources 110 are fitted onto an insertion probe 104 so that 360-degree photography and/or 360-degree video, or similar panoramic technology may be realized fully or partially. Each light source 110 may be protected with a protective grill 172. In this embodiment imaging sensors 112 and light sources 110 are in pairs on opposite sides of insertion probe 104. 360-degree imaging is thus associated with corresponding 360-lighting. This imaging sensor and light source arrangement is advantageous as it offers a larger effective field of view than a single imaging sensor and light source. Furthermore, 360-degree technology allows the operator to adjust image direction of view remotely, thus reducing the need to physically rotate and aim the inspection apparatus.

Additionally, the general shape of the inspection apparatus 100, specially, the viewing or handle arm segment 102, may look different as long as the insertion tube 150, is still attached to it, allowing a set of LEDs 110, and imaging sensor(s) 112, to be placed in such a way as was described earlier to enable the easy viewing of a cavity 306.

It should be understood that the functions of the electrical main unit 208 responsible for control logic, the video processing logic and some user interaction (Ul) elements of the inspection apparatus 100, including any and all physical buttons and switches, can be in part or fully realized on the external electronic device 250. The inspection camera is intended to work wirelessly 114, with external electronic devices 250, as more clearly shown in FIG. 1. The functionality of the inspection apparatus 100, can vary depending on the implementation, however in one embodiment of this invention, the inspection apparatus 100 may comprise "memory slots" 222, that allow for a removeable storage media 224 to be inserted into the inspection apparatus 100, for recording of either still images, video segments or other device data 252 onto the storage media 224.

The inspection apparatus may comprise a data port 220 configured to transfer both electricity and data signals, which may be a USB, a Firewire, a HDMI (High-Definition Multimedia Interface) or any number of other applicable data ports, that allow for the transfer of images and/or video and/or other device data 252 from the inspection apparatus 100, to an external electronic device 250, such as, for example, a tablet computer, a smart-phone, to name a few. The data port 220 may also be used to externally power or charge the insertion probe 104 when there is no gaseous medium flow provided for generating electricity.

As this inspection apparatus 100 is portable and the insertion probe 104 has preferably a turbine as source of electricity, additional use of batteries does not need to be excluded. The insertion probe 104 may comprise a slot or enclosure for receiving a battery, which may be of the disposable kind, as well as of a rechargeable variety. If rechargeable, the battery or batteries may remain in the insertion probe 104 during charging - which can be accomplished with charging circuitry in the insertion probe 104, along with a connector that provides electrical connection, for example, to a power wall outlet. It should also be appreciated that the battery, or the rechargeable battery, could be charged via a data port 220, or via a separate DC power input, or by using an external power supply, to name a few. Use of a battery as an energy source for the electronics in the insertion probe is not recommended in hot environments, since batteries have typically much lower allowed operation temperatures than electronics. However, the device may be provided with a battery slot that enables inserting a battery and operating the insertion probe with energy provided from a battery when it is used in an environment that is not too hot for the battery. Utilizing the battery as an energy source should preferably be disabled electronically, if it is detected that the turbine is in operation, generating the required electrical energy. It should be noticed that a battery should not be used even in moderately hot environment, since it may cause a risk of fire and/or explosion. Therefore, although using a battery or batteries as electricity source is possible, a safe inspection apparatus product should not provide a possibility to have a battery in the insertion probe or at any portion of the arm that can enter the reasonably hot cavity.

The inspection apparatus 100 allows for the transmission of images from an enclosed environment within the interior of a moderately hot cavity to an exterior location. With a moderately hot cavity, we refer to a cavity that is clearly less hot than an operating burner, which may reach temperatures up to about 1000°C or even more. Allowed operation temperature of the inspection apparatus 100 allows operating it in a moderately hot cavity that preferably has a temperature between 75°C and 300°C, more preferably between 100°C and 200°C Celsius. Allowed operation temperature range of the electronics and active elements of the inspection probe may be less than the allowed maximum temperature within the cavity under inspection, as long as the cooling effect provided by the flow of gaseous medium can maintain temperature of the electronics and active elements within their actual, allowed operating temperature range. Naturally, the inspection apparatus may also be used in cavities with lower temperatures, i.e. under 75°C or 100°C, respectively, although in such case, cooling effect is not necessarily required for ensuring safe operation of the insertion probe. However, flor of gaseous medium can still be used for generating electricity. As stated earlier that the cavity, chamber or duct 306, has access port(s) or orifice(s) 300, which become available for inspection purposes if devices occupying these ports are dismounted and combustion or other hot process is put to standstill. The inspection apparatus 100, comprises of an essentially rigid, generally tubular, elongated, insertion probe 104, and a handle arm 102.

The insertion tube 150, forming the housing of the insertion probe 104, and the arm 122 can be manufactured from a number of materials, including, for example, metal such as aluminium or stainless steel, plastics, composite materials, to name a few. One important distinction for this segment of the inspection device 100, is that the diameter or the cross-section of the insertion probe 104, is designed according to dimensions of typical combustion system and process industry ports. The diameter or the cross-sectional area of the insertion probe 104, and arm 122, preferably would correspond to an insertion port 300.

The protective grill 172 is for mechanical protection of light sources 110. The shape and form, or lack thereof of protective grill 172 may differ greatly from the one presented in this invention, as the grill can be fashioned to better suit the task at hand, or in some applications, the grill 172 or other protective structures, can be left out.

The cross-sectional area for the inventive insertion probe 104 and arm 122 can be selected from a group comprising triangle, a square, a rectangle, a circle, an oval, a polygonal shape, a cylindrical shape, and combinations thereof, to name a few.

The inspection apparatus 100, preferably comprises at least one protective shielding 164 made of transparent or translucent material, to environmentally protect the at least one light source 110 and the at least one imaging sensor 112. The transparent or translucent material of the protective shielding 164 is selected from a group comprising glass, quartz, synthetic sapphire, polymeric material, composite material, and combinations thereof, to name a few. Protective shielding 164 of the imaging sensor is preferably made of transparent material, while the protective shielding 164 of the light source(s) may be made of transparent or translucent material.

The insertion probe 104, may be connected to the arm 122, in a number of manners, which may include, but not limited to, being connected in a solid fashion, from one tube piece, or with connectors, and it may be connected removably so it can be placed in a travel box or case (not shown). The light source(s) 110, and imaging sensor(s) 112, are configured onto the hollow insertion tube 150, in a manner such that they will not interfere with the insertion of this probe 104, and generally do not extend outside the insertion tube's 150 cross-sectional profile. Therefore, damage is avoided when the insertion probe 104, is inserted into - and retracted from - a typical port or orifice of a combustion system or process industry system. Preferably, the lights sources 110, as well as the imaging sensor 112, are encased within the hollow insertion tube 150. Number of light sources may differ from figures 1 through 5. Important is that the light sources 110 have a field of illumination that corresponds at least the field of view of the camera. This is achieved by occupying a relatively large surface area of the insertion probe 104 by light sources, or more specifically, by the transparent protective shielding 164 housing the light sources 110. A wide illumination angle can be achieved in other ways, for example by means of lensing. There may be instances where the light sources 110 have various spectral wavelengths of light, both visible and non-visible, depending on the application of the inspection apparatus 100. The light sources 110 emitting both visible and non-visible light, may or may not be present both at the same time on the same inspection apparatus 100, depending on the embodiment of the invention.

The wireless connection 114 may also utilize other applicable wireless standards and protocols, for communication with the external electronic devices 250, as appropriate in order to transmit the required still images, video streams and/or other device data to the external electronic device 250, in as close to real-time as possible. The storage of the images, video clips and/or other device data 252 may be saved to an "on-board" memory device 224, inside the insertion probe 104, or in an external electronic device 250, for example, a computer, a smart-phone, a tablet computer, to name a few. Images and/or video clips 252 may also be saved in both, on-board and external memories (224, 254).

It should be appreciated that at least one imaging sensor 112, could be selected from a group comprising a camera, a video camera, a still camera, an infrared camera, a thermal camera, and combination thereof.

For some applications one could also have preferably on the external electronic device 250, a light source intensity dimming control and light source on-off selection, which could be used to control the light properties of the light source(s) 110, while the insertion probe is inside the cavity 306, as desired.

It should be appreciated that firmware on the microcontroller monitors all the functions of the inspection apparatus 100, such as, for example, parameters of electrical source, the push button controls 212, video quality, on the external electronic device 250, temperature sensor 210 monitoring, failure detection of any of its components of the inspection apparatus 100, to name a few.

The firmware on the microcontroller applies image enhancement methods to improve the video or image 252 quality, by utilizing various methods of image processing, such as, for example, colour correction, noise reduction, smoothing, pixel intensity mapping, gamma correction, to name a few.

The image enhancement can take place automatically by continuously getting feedback from the imaging sensor, and or by applying image correction methods, which are well known in the art.

Imaging sensor 112, can be an analog or digital camera, providing, for example, VGA (640 x 480 pixels), HDV (1440 x 1080 pixels), or 2K (1998 x 1080 pixels), to name a few. Camera sensor can be upgraded or downgraded to another resolution and/or aspect ratio imaging sensor 112. 360-degree viewing, presented in the figure 5, as an alternative embodiment, may require specific resolution and aspect ratio for imaging sensors 112.

One or more programming and debugging interface may be provided towards the imaging sensor. These can comprise, for example, SPI, 12C, JTAG, UART, several test points, to name a few. Inspection apparatus functionality may include image enhancement, where image quality by adhering different methods of image processing such as colour correction, noise cancellation, smoothing, pixel intensity mapping and gamma correction, to name a few.

The inspection apparatus 100 may be implemented using one or more computers executing software instructions. According to one embodiment of the present invention, the inspection apparatus 100 communicates with a client and server computer system that transmits and receives image data 252, over a computer network or a fibre- or copper-based telecommunications network 114. The steps of accessing, downloading, and manipulating the data, as well as other aspects of the present invention are implemented by central processing units (CPU) in the server and client computers executing sequences of instructions stored in a memory. The memory may be a random-access memory (RAM), read-only memory (ROM), a persistent store, such as a mass storage device, or any combination of these devices. Execution of the sequences of instructions causes the CPU to perform steps according to embodiments of the present invention.

The instructions may be loaded into the memory of the server or client computers from a storage device or from one or more other computer systems overs a network connection. For example, a client computer may transmit a sequence or instructions to the server computer in response to a message transmitted to the client over a network server. As the server receives the instruction over network connection, it stores the instruction in memory. The server may store the instructions for later execution, or it may execute the instruction as they arrive over the network connection. In some cases, the CPU may directly support the downloaded instructions. In other cases, the instructions may not be directly executable by the CPU and may instead be executed by an interpreter that interprets the instructions. In other embodiments, hardwired circuitry may be used in place of, or in combination with, software instruction to implement the present invention. Thus, tools used in the present invention are not limited to any specific combination of hardware circuitry and software, nor to any particular source for the instructions executed by the server or client computers. In some instances, the client and server functionality may be implemented a single computer platform.

Thus, the present invention is not limited to the embodiments described herein and the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

Still further, while certain embodiments of the inventions have been described, these embodiments have been presented by way of example only and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions.

It should be further understood that throughout the specification and claims several terms have been used and they take the meanings explicitly associated herein, unless the context clearly dictates otherwise. For example, the phrase "in one embodiment" as used herein does not necessarily refer to the same embodiment, though it may. Additionally, the phrase "in another embodiment" as used herein does not necessarily refer to a different embodiment, although it may. Thus, various embodiments of the invention may be readily combined, without departing from the scope or spirit of the invention.

While the present invention has been particularly described in conjunction with a specific preferred embodiment, it is evident that many alternatives, modifications and variations will be apparent to those skilled in the art in light of those foregoing description. It is therefore contemplated that appended claims will embrace any such alternatives, modifications and variations as falling within the true scope and spirit of the present invention.

## Claims

1. An inspection apparatus (100), comprising an insertion probe (104) built into a hollow insertion tube (150) extending axially at a distal end of a handle arm (102), wherein the insertion probe (104) comprises:
- at least one imaging sensor (112);
- at least one light source (110); and
- at least one wireless communication means for communicating wirelessly with at least one external electronic device (250);
wherein both the insertion probe (104) and the handle arm (102) have one or more pathways for gaseous medium flow; and
wherein the insertion probe (104) comprises energy conversion means, such as a turbine (200), to convert kinetic energy contained in said gaseous medium (106) into electric energy.

2. The inspection apparatus (100) according to claim 1, wherein the gaseous medium flow is configured, during operation of the inspection apparatus (100), to have a cooling effect on the components of the insertion probe (104).

3. The inspection apparatus (100) according to claim 1 or 2, wherein the handle arm (102) comprises or is connected to gas flow adjustment means (124) for controlling cooling action achieved by a flow of the gaseous medium (106) through said handle arm (102) towards and through said insertion probe (104).

4. The inspection apparatus (100) according to any one of claims 1 to 3, wherein the at least one imaging sensor (112) is selected from a group comprising a camera, a video camera, a still camera, an infrared camera, a thermal camera, and combination thereof.

5. The inspection apparatus (100) according any one of claims 1 to 4, wherein the at least one light source (110) comprises at least one light emitting diode (LED).

6. The inspection apparatus (100) according to any one of claims 1 to 5, wherein said insertion probe (104) comprises at least one data port (220), and wherein said at least one data port (220) is selected from a group comprising a video port, a digital port, a digital output port, a memory slot, a USB port, a Firewire port, a HDMI port, a digital output port, and combination thereof.

7. The inspection apparatus (100) according to any one of claims 1 to 6, wherein said insertion probe (104) comprises at least one temperature sensor (210) and optionally at least one temperature-triggered switch.

8. The inspection apparatus (100) according to any one of claims 1 to 7, wherein said insertion probe (104) comprises at least one directional or omnidirectional antenna (204) for wirelessly transmitting still images and video to the at least one external electronic device (200).

9. The inspection apparatus (100) according to any one of claims 1 to 8, wherein said insertion probe (104) comprises at least one mounting bar (158) functioning also as a heat sink.

10. The inspection apparatus (100) according to any one of claims 1 to 9, wherein said at least one light source (110) is protected from the ambient environment by a protective shielding (164) made of transparent or translucent material and/or said at least one imaging sensor (112) is protected from the ambient environment by a protective shielding (164) made of transparent material.

11. The inspection apparatus (100) according to claim 10, wherein said transparent or translucent material is selected from a group comprising of glass, quartz, synthetic sapphire, polymeric material, composite material, and combinations thereof.

12. The inspection apparatus (100) according to any one of claims 1 to 11, wherein material of the insertion tube (150) forming a housing of the insertion probe (104) is selected from a group consisting of metal, such as aluminium and stainless steel, plastic, a composite material, and combination thereof.

13. The inspection apparatus (100) according to any one of claims 1 to 12, wherein the hollow insertion tube (150) comprises a sloped section (162) at the proximal side of the at least one imaging sensor (112), wherein the sloped section (162) is inclined inwards from the outer surface of the insertion tube (150) for providing a wider angle of view for the imaging sensor (112) towards the proximal end of the inspection apparatus and/or the hollow insertion tube (150) comprises a sloped section (162) at the distal side of the at least one imaging sensor (112), wherein the sloped section (162) is inclined inwards from the outer surface of the insertion tube (150) for providing a wider angle of view for the imaging sensor (112) towards the distal end of the inspection apparatus.

14. A method of inspecting a cavity (306), the method comprising the steps of:
- opening a port or orifice (300) leading to the cavity (306),
- adjusting flow of a gaseous medium (106) through a hollow insertion tube (150),
- during operation, converting kinetic energy contained in said flow of gaseous medium (106) into electric energy,
- inserting an insertion probe (104) built into the hollow insertion tube (150) extending axially at a distal end of a hollow handle arm (102) of an inspection apparatus through said port or orifice into said cavity,
- activating at least one light source (110) of the insertion probe (104) and at least one imaging sensor (112) of the insertion probe (104) to conduct inspection within said cavity,
- conducting inspection by remotely viewing wirelessly transmitted still or video images of objects under investigation obtained by said at least one imaging sensor (112) and transmitted by a wireless communication means of said insertion probe (104),
- removing said insertion probe (104) from the cavity (306) upon completion of said internal cavity, and
- closing said port or orifice (300) leading to the cavity (306).

15. The method according to claim 14, comprising cooling components of the insertion probe (104) during operation of an inspection apparatus (100) by the flow of the gaseous medium (106).
